# EUROPEAN PATENT APPLICATION

(11) **EP 4 538 881 A1**
(43) Date of publication of application: **16.04.2025**
(21) Application number: 23830387.9
(22) Date of filing: 29.06.2023
(51) Int. Cl.: G06F 9/50

(54) **VIRTUAL RESOURCE ALLOCATION METHOD AND RELATED DEVICE**

(30) Priority: 30.06.2022 CN 202210770565
(71) Applicant: Beijing Wellintech Co., Ltd., Beijing 100086 (CN)
(72) Inventor: LIN, Wei, Beijing 100086 (CN)
(74) Representative: Murgitroyd & Company
(86) International application number: PCT/CN2023/103695
(87) International publication number: WO 2024/002218

(57) **Abstract**

The present application relates to the technical field of software, and relates to a virtual resource allocation method and a related device. The method comprises: acquiring a first virtual resource, wherein the first virtual resource is paid to the account of an application store when a user equipment acquires an authorization permission of a second application in the application store, the second application has an association relationship with a first application, and the second application can call the first application to realize the function of the first application; according to the value of the second application and the value of the first application, determining, in the first virtual resource, a second virtual resource allocated to the account of the second application and a third virtual resource allocated to the account of the first application; and allocating the second virtual resource to the account of the second application, and allocating the third virtual resource to the account of the first application. According to the present application, the virtual resource allocation process is simpler and faster, the allocation process is simple and reliable, the benefit distribution dispute between developers is reduced, and the willingness and enthusiasm of the developers participating in application development ecology are effectively improved.

## Description

This application claims priority to Chinese Patent Application No. 202210770565.2, filed on June 30, 2022, which is incorporated herein by reference in its entirety.

### TECHNICAL FIELD

The present application relates to the field of software technologies, and in particular, to a method for virtual resource allocation and a related device.

### BACKGROUND

An application (APP), also known as an App, refers to a computer program for accomplishing one or more specific tasks, can be run in a user mode to interact with users, and can have a visual user interface. Developers of applications can publish the developed applications on an application store, and users who need to use the applications can download them from the application store. After downloading the applications from the application store, the users need first acquire authorization permissions for the applications if they need to use the applications or use the applications for a long time.

When a user acquires an authorization permission for an application, the user generally needs to pay the authorization fee for purchasing the application to an account of the application store. The application store can allocate the fee paid by the user to an account of the application.

Currently, the method in which the application store allocates the fee to the account of the application is as follows: every time the account of the application store receives the fee paid by the user for purchasing the authorization permission for the application, the application store allocates the fee to the account of the application. However, the current allocation method is inefficient. If the application is developed collaboratively by multiple developers (or development organizations), the current allocation method cannot solve the fee allocation problem in the scenario where the application is collaboratively developed by multiple developers.

### SUMMARY

The present disclosure provides a method for virtual resource allocation and a related device, which can allocate a virtual resource, which is paid by a user for purchasing an authorization permission for a second application, to an account of the second application and an account of a first application based on an associated relationship between the second application and the first application when the user purchases the authorization permission for the second application.

The technical solutions of the present disclosure are as follows.

In a first aspect, the present disclosure provides a method for virtual resource allocation. The method includes: acquiring a first virtual resource, where the first virtual resource is paid to an account of an application store when a user equipment acquires an authorization permission for a second application in the application store, the second application and a first application in the application store have an associated relationship, and the second application is capable of calling the first application to realize functions of the first application; determining, based on a value of the second application and a value of the first application, a second virtual resource allocated to an account of the second application and a third virtual resource allocated to an account of the first application in the first virtual resource; and allocating the second virtual resource to the account of the second application and allocating the third virtual resource to the account of the first application.

In some implementations, determining, based on the value of the second application and the value of the first application, the second virtual resource allocated to the account of the second application and the third virtual resource allocated to the account of the first application in the first virtual resource includes: determining a fourth virtual resource from the first virtual resource based on the value of the second application and the value of the first application; determining the second virtual resource from the fourth virtual resource based on a first allocation rule; determining a fifth virtual resource from the first virtual resource based on the value of the first application; and determining the third virtual resource from the fifth virtual resource based on a second allocation rule.

Optionally, the fourth virtual resource is equal to a difference between the value of the second application and the value of the first application. The fifth virtual resource is equal to the value of the first application.

In some implementations, the first allocation rule includes: a ratio of the second virtual resource to the fourth virtual resource, or the second virtual resource being a remaining resource after removing a first fixed virtual resource from the fourth virtual resource.

In some implementations, the second allocation rule includes: a ratio of the third virtual resource to the fifth virtual resource, or the third virtual resource being a remaining resource after removing a second fixed virtual resource from the fifth virtual resource.

Optionally, the first fixed virtual resource and the second fixed virtual resource are the same or different.

Optionally, acquiring the first virtual resource includes: receiving an authorization request from the user equipment, the authorization request being used for requesting to acquire the authorization permission for the second application; in response to the authorization request, sending second information to the user equipment based on the value of the second application, the second information comprising the value of the second application; and receiving the first virtual resource paid from the user equipment.

Optionally, the method further includes: receiving a first download request from the user equipment, the first download request being used for requesting download of the second application; and sending the second application and the first application to the user equipment in response to the first download request.

Optionally, the method further includes: receiving a second download request, the second download request being used for requesting download of the first application in the application store; and sending the first application in response to the second download request, the first application being used for developing the second application.

In some implementations, copyright owners of the first application and the second application are the same.

In some other implementations, copyright owners of the first application and the second application are different.

In some implementations, developers of the first application and the second application are the same.

In some other implementations, developers of the first application and the second application are different.

Optionally, the second application includes first information, and the first information is used for indicating the first application associated with the second application.

In some implementations, the first information includes an identifier of the first application; and different applications in the application store have different identifiers.

In a second aspect, the present disclosure provides a device for virtual resource allocation, the device is applied to an application store, and the application store includes at least a first application and a second application. The device can be used in an application store to implement the method for virtual resource allocation as described in the first aspect and any possible implementation of the first aspect. The functions of the device can be implemented by hardware, or by hardware executing corresponding software. The hardware or software includes one or more modules or units corresponding to steps in the method for virtual resource allocation described in the first aspect and any possible implementation of the first aspect.

For example, the device includes: an acquisition module, a processing module, and an allocation module. The acquisition module is used for acquiring a first virtual resource, where the first virtual resource is paid to an account of an application store when a user equipment acquires an authorization permission for a second application in the application store; the second application and a first application in the application store have an associated relationship; and the second application is capable of calling the first application to realize functions of the first application. The processing module is used for determining, based on a value of the second application and a value of the first application, a second virtual resource allocated to an account of the second application and a third virtual resource allocated to an account of the first application in the first virtual resource. The allocation module is used for allocating the second virtual resource to the account of the second application and allocating the third virtual resource to the account of the first application.

In some implementations, the processing module is specifically used for: determining a fourth virtual resource from the first virtual resource based on the value of the second application and the value of the first application; determining the second virtual resource from the fourth virtual resource based on a first allocation rule; determining a fifth virtual resource from the first virtual resource based on the value of the first application; and determining the third virtual resource from the fifth virtual resource based on a second allocation rule.

Optionally, the fourth virtual resource is equal to a difference between the value of the second application and the value of the first application. The fifth virtual resource is equal to the value of the first application.

In some implementations, the first allocation rule includes: a ratio of the second virtual resource to the fourth virtual resource, or the second virtual resource being a remaining resource after removing a first fixed virtual resource from the fourth virtual resource.

In some implementations, the second allocation rule includes: a ratio of the third virtual resource to the fifth virtual resource, or the third virtual resource being a remaining resource after removing a second fixed virtual resource from the fifth virtual resource.

Optionally, the first fixed virtual resource and the second fixed virtual resource are the same or different.

Optionally, the acquisition module is specifically used for: receiving an authorization request from the user equipment, the authorization request being used for requesting to acquire the authorization permission for the second application; in response to the authorization request, sending second information to the user equipment based on the value of the second application, the second information including the value of the second application; and receiving the first virtual resource paid from the user equipment.

For example, the acquisition module includes a receiving module and a sending module; the receiving module is used for receiving the authorization request from the user equipment. The sending module is used for, in response to the authorization request, sending second information to the user equipment based on the value of the second application. The receiving module is further used for receiving the first virtual resource paid from the user equipment.

Optionally, the receiving module is further used for receiving a first download request from the user equipment, the first download request being used for requesting download of the second application. The sending module is further used for sending the second application and the first application to the user equipment in response to the first download request.

Optionally, the receiving module is further used for receiving a second download request, the second download request being used for requesting download of the first application in the application store. The sending module is further used for sending the first application in response to the second download request, where the first application is used for developing the second application.

In some implementations, copyright owners of the first application and the second application are the same.

In some other implementations, copyright owners of the first application and the second application are different.

In some implementations, developers of the first application and the second application are the same.

In some other implementations, developers of the first application and the second application are different.

Optionally, the second application includes first information, and the first information is used for indicating the first application associated with the second application.

In some implementations, the first information includes an identifier of the first application; and different applications in the application store have different identifiers.

In a third aspect, the present disclosure provides an electronic device. For example, the electronic device is a hardware device corresponding to the application store described in the above first aspect. The electronic device includes a processor and a memory used for storing instructions executable by the processor. The processor is configured to, when executing the instructions, cause the electronic device to implement the method as described in the first aspect and any possible implementation of the first aspect.

In a fourth aspect, the present disclosure provides a computer-readable storage medium having computer program instructions stored thereon; when the computer program instructions are executed by an electronic device, the electronic device implements the method as described in the first aspect and any possible implementation of the first aspect.

In a fifth aspect, the present disclosure provides a computer program product, including a computer-readable code, or a non-volatile computer-readable storage medium carrying a computer-readable code. When the computer-readable code is executed in an electronic device, a processor in the electronic device implements the method as described in the first aspect and any possible implementation of the first aspect.

Based on any of the above first to fifth aspects, the present disclosure has at least the following beneficial effects.

In the present disclosure, when the user purchases the authorization permission for the second application, the application store can allocate, based on the associated relationship between the second application and the first application, the virtual resource paid by the user when purchasing the authorization permission for the second application to the account of the second application and the account of the first application. For the scenario where the second application is collaboratively developed by different developers, the present disclosure realizes a more effective and convenient manner for virtual resource allocation. For example, by allocating, based on the associated relationship between the second application and the first application, the virtual resource paid by the user when purchasing the authorization permission for the second application to the account of the second application and the account of the first application, it may be possible to make the process of virtual resource allocation simpler and faster. The process of virtual resource allocation is simple and reliable, which reduces profit distribution disputes among developers and effectively enhances the willingness and enthusiasm of developers to participate in the application development ecosystem.

It will be understood that the foregoing general description and the following detailed description are exemplary and explanatory only and are not restrictive of the present disclosure.

### BRIEF DESCRIPTION OF THE DRAWINGS

The accompanying drawings herein are incorporated into the specification and constitute a part of the specification, illustrate embodiments consistent with the present disclosure, and together with the specification are used to explain the principles of the present disclosure, and do not constitute improper limitations on the present disclosure.
FIG. 1 is a schematic flow chart of a method for virtual resource allocation provided in embodiments of the present disclosure;
FIG. 2 is a schematic flow chart of another method for virtual resource allocation provided in embodiments of the present disclosure;
FIG. 3 is a schematic diagram showing a relationship between a model and a predefinition provided in embodiments of the present disclosure;
FIG. 4 is a schematic diagram of a data model provided in embodiments of the present disclosure;
FIG. 5 is a schematic diagram showing a composition of an APP model of a second application provided in embodiments of the present disclosure;
FIG. 6 is a schematic diagram showing a composition of an application management system provided in embodiments of the present disclosure;
FIG. 7 is a schematic diagram showing a process of a consumer purchasing an APP provided in embodiments of the present disclosure;
FIG. 8 is a schematic diagram showing a level-by-level allocation provided in embodiments of the present disclosure; and
FIG. 9 is a schematic structural diagram of a device for virtual resource allocation provided in embodiments of the present disclosure.

### DETAILED DESCRIPTION

For a person of ordinary skill in the art to better understand the technical solutions of the present disclosure, technical solutions in embodiments of the present disclosure will be described clearly and completely with reference to the accompanying drawings.

It will be noted that the terms "first", "second", etc. in the specification and claims of the present disclosure and the above-mentioned accompanying drawings are used to distinguish similar objects, and are not necessarily used to describe a specific order or sequence. It will be understood that the terms used herein are interchangeable under appropriate circumstances such that the embodiments of the present disclosure described herein can be implemented in sequence other than those illustrated or described herein. The implementations described in the following embodiments do not represent all implementations consistent with the present disclosure. In addition, they are merely examples of devices and methods consistent with aspects of the present disclosure as recited in the claims.

It will also be understood that the term "comprise" or "include" indicates the presence of described features, integers, steps, operations, elements and/or components, but does not exclude the presence or addition of one or more other features, integers, steps, operations, elements and/or components.

The term "and/or" is used to describe the association relationship of associated objects, indicating that three relationships may exist. For example, A and/or B represent three situations: A exists alone, A and B exist at the same time, and B exists alone. The character "/" generally indicates that the former and latter associated objects are in an "or" relationship.

An application (APP), also known as an App, refers to a computer program for accomplishing one or more specific tasks, can be run in a user mode to interact with users, and can have a visual user interface. Developers of applications can publish the developed applications on an application store, and users who need to use the applications can download them from the application store.

The application store can be implemented on a server, a computer and other hardware devices, and can also provide users with an interactive application store interface for the users to download the required applications.

For example, in industry-related scenarios, an industrial Internet platform is built based on a server, a computer, or other hardware devices. The industrial Internet platform is the above application store. Application developers may publish their developed applications on the Industrial Internet platform, and the users who need to use the applications may download the applications from the Industrial Internet platform and use them.

After downloading the applications from the application store, the users need first acquire authorization permissions for the applications if they need to use the applications or use the applications for a long time. When a user acquires an authorization permission for an application, the user generally needs to pay the authorization fee for purchasing the application to an account of the application store. The application store can allocate the fee paid by the user to the account of the application store.

It will be understood that an authorization permission of an application refers to a permission that limits the application to create running instance. When the application has the authorization permission, it can create running instances within the scope allowed by the authorization permission (such as a time range). When the application does not have the authorization permission, the application can only operate in a trial run mode and cannot create running instances, or time for creating running instances is limited to a trial run time range.

Currently, the method in which the application store allocates the fee to the account of the application is as follows: every time the account of the application store receives the fee paid by the user for purchasing the authorization permission for the application, the application store allocates the fee to the account of the application.

However, the current allocation method is inefficient. If the application is developed collaboratively by multiple developers (or development organizations), the fee for multiple developers can only be distributed offline. In other words, the current allocation method cannot solve the fee allocation problem in the scenario where the application is collaboratively developed by multiple developers.

In light of this, embodiments of the present disclosure provide a method for virtual resource allocation. The method can be applied to a scenario where a complete application contains a plurality of sub-applications (or a scenario where a complete application is associated with a plurality of sub-applications). For example, for a second application, the second application has an associated relationship with a first application and can call the first application to implement functions of the first application; and thus, the first application can be considered as a sub-application of the second application. In the method for virtual resource allocation, when a user purchases an authorization permission for the second application, an application store can allocate, based on the associated relationship between the second application and the first application, a virtual resource paid by the user for purchasing the authorization permission for the second application to an account of the second application and an account of the first application.

This method may effectively improve an efficiency of the virtual resource allocation and solve a fee allocation problem in a scenario where an application is collaboratively developed by multiple developers.

The virtual resource refers to money, points, or other information that can be used for trading APP, which is paid by the user for purchasing the authorization permissions for the application (e.g., the second application) in the application store. The type of the virtual resource will not be limited herein.

Optionally, the account of the application may refer to an account of a developer who develops the application or an account of a copyright owner of the application, which will not be limited herein.

For example, the method for virtual resource allocation provided in the embodiments of the present application can be implemented on a hardware device corresponding to the application store. For example, the hardware device includes a server, a computer, or the like. The server may be a single server or a server cluster consisting of a plurality of servers. In some implementations, the server cluster may be a distributed cluster. The specific implementations for the hardware device corresponding to the application store will not be limited in the present disclosure. It will be noted that steps implemented on the application store side involved in various methods provided in the embodiments of the present disclosure may all be implemented by the hardware device corresponding to the application store.

Hereinafter, the method for virtual resource allocation provided in the embodiments of the present disclosure will be described.

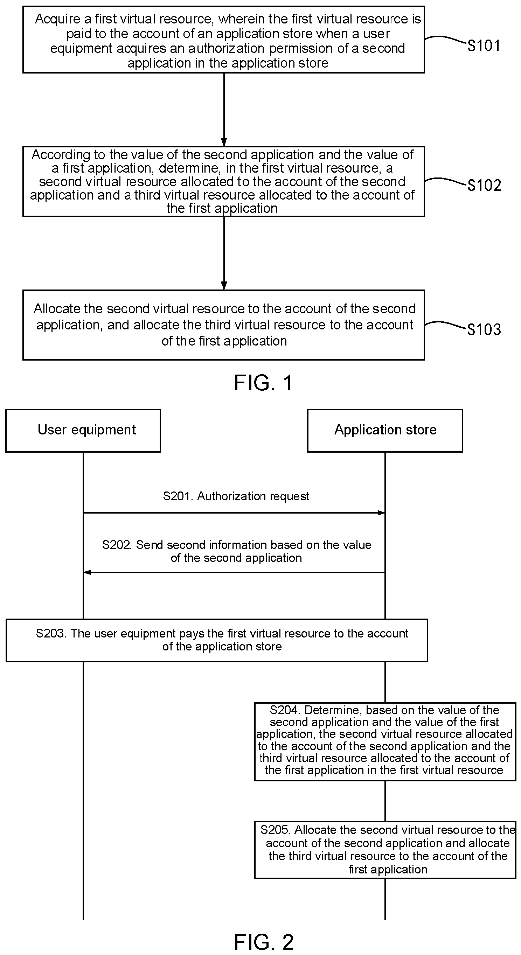

FIG. 1 is a schematic flow chart of a method for virtual resource allocation provided in embodiments of the present disclosure. As shown in FIG. 1, the method for virtual resource allocation includes the following steps.

In S101, a first virtual resource is acquired. The first virtual resource is paid to an account of an application store when a user equipment acquires an authorization permission for a second application in the application store.

For example, when the user purchases the authorization permission for the second application from the application store through the user equipment (such as a mobile phone), the user needs to pay a certain amount of virtual resource to the account of the application store, and the virtual resource is the first virtual resource acquired in S101. The first virtual resource may be money, points, etc., which will not be limited herein.

In S102, a second virtual resource in the first virtual resource allocated to an account of the second application and a third virtual resource in the first virtual resource allocated to an account of the first application are determined based on a value of the second application and a value of the first application.

As described above, the second application has the associated relationship with the first application in the application store, and the second application can call the first application to implement the functions of the first application. When the application store allocates the first virtual resource, the application store not only needs to allocate a virtual resource to the account of the second application, but also needs to allocate a virtual resource to the account of the first application.

For example, the step S102 in which the second virtual resource in the first virtual resource allocated to the account of the second application and the third virtual resource in the first virtual resource allocated to the account of the first application are determined based on the value of the second application and the value of the first application includes: determining a fourth virtual resource from the first virtual resource based on the value of the second application and the value of the first application; determining the second virtual resource from the fourth virtual resource based on a first allocation rule; determining a fifth virtual resource from the first virtual resource based on the value of the first application; and determining the third virtual resource from the fifth virtual resource based on a second allocation rule.

Considering an example in which the virtual resource is money, it is assumed that the value of the second application (i.e., the money required to purchase the authorization permission for the second application) is 300 yuan and the value of the first application is 200 yuan, then when the user purchases the authorization permission for the second application, the user needs to pay 300 yuan to the account of the application store, and this 300 yuan is the above-mentioned first virtual resource. Based on the value (300 yuan) of the second application and the value (200 yuan) of the first application, the application store can determine part of the money (e.g., 100 yuan) to be allocated to the account of the second application from this 300 yuan, and determine part of the money (e.g., 200 yuan) to be allocated to the account of the first application from this 300 yuan. The 100 yuan to be allocated to the account of the second application is the fourth virtual resource, and the 200 yuan to be allocated to the account of the first application is the fifth virtual resource.

The application store can take a cut of the 100 yuan to be allocated to the account of the second application, and actually allocate the remaining part after the cut to the account of the second application. For example, the application store takes 10 yuan out of the 100 yuan to be allocated to the account of the second application; and after the cut, the money actually allocated to the account of the second application is 90 yuan, which is the above-mentioned second virtual resource.

Similarly, the application store can also take a cut of the 200 yuan to be allocated to the account of the first application, and actually allocate the remaining part after the cut to the account of the first application. For example, the application store takes 10 yuan out of the 200 yuan to be allocated to the account of the first application; and after the cut, the money actually allocated to the account of the first application is 190 yuan, which is the above-mentioned third virtual resource.

Optionally, the fourth virtual resource can be equal to a difference between the value of the second application and the value of the first application; and the fifth virtual resource can be equal to the value of the first application. For example, for the above example where the value of the second application is 300 yuan and the value of the first application is 200 yuan, the fourth virtual resource is the difference between 300 yuan and 200 yuan, i.e., 100 yuan, and the fifth virtual resource is 200 yuan.

Optionally, the fourth virtual resource and the difference between the value of the second application and the value of the first application cannot be equal. For example, the fourth virtual resource is greater than or less than the difference between the value of the second application and the value of the first application. The fifth virtual resource and the value of the first application cannot be equal. For example, the fifth virtual resource is greater than or less than the value of the first application. These will not be limited herein.

In the embodiments of the present disclosure, the application store can determine the second virtual resource from the fourth virtual resource based on the first allocation rule, and determine the third virtual resource from the fifth virtual resource based on the second allocation rule.

In some implementations, the first allocation rule can include a ratio of the second virtual resource to the fourth virtual resource, or include that the second virtual resource is a remaining resource after removing a first fixed virtual resource from the fourth virtual resource.

For example, the fourth virtual resource is 100 yuan as mentioned above; and it is assumed that the ratio of the second virtual resource to the fourth virtual resource included in the first allocation rule is 90%, then the application store determines that the second virtual resource is 90% of 100 yuan (i.e., 90 yuan) based on the first allocation rule. For another example, it is assumed that the first allocation rule includes that the second virtual resource is the remaining resource after removing the first fixed virtual resource from the fourth virtual resource, and assumed that the first fixed virtual resource is 15 yuan, then the application store determines, based on the first allocation rule, that the second virtual resource is 85 yuan, which is the remaining money after removing 15 yuan from 100 yuan. Through the first allocation rule, the application store may take a cut of the 100 yuan to be allocated to the account of the second application.

It will be noted that a magnitude of the ratio of the second virtual resource to the fourth virtual resource in the first allocation rule and a magnitude of the first fixed virtual resource will not be limited in the present disclosure.

Similar to the first allocation rule, the second allocation rule can include a ratio of the third virtual resource to the fifth virtual resource, or include that the third virtual resource is a remaining resource after removing a second fixed virtual resource from the fifth virtual resource.

For example, the fifth virtual resource is 200 yuan as mentioned above; and it is assumed that the ratio of the third virtual resource to the fifth virtual resource included in the second allocation rule is 80%, then the application store determines that the third virtual resource is 80% of 200 yuan (i.e., 160 yuan) based on the second allocation rule. For another example, it is assumed that the second allocation rule includes that the third virtual resource is the remaining resource after removing the second fixed virtual resource from the fifth virtual resource, and assumed that the second fixed virtual resource is 25 yuan, then the application store determines, based on the second allocation rule, that the third virtual resource is 175 yuan, which is the remaining money after removing 25 yuan from 200 yuan.

It will be noted that a magnitude of the ratio of the third virtual resource to the fifth virtual resource in the second allocation rule and a magnitude of the second fixed virtual resource will not be limited in the present disclosure.

Optionally, the ratio of the second virtual resource to the fourth virtual resource in the first allocation rule can be the same as or different from the ratio of the third virtual resource to the fifth virtual resource in the second allocation rule, and the first fixed virtual resource can be the same as or different from the second fixed virtual resource, which will not be limited herein.

In S103, the second virtual resource is allocated to the account of the second application, and the third virtual resource is allocated to the account of the first application.

Considering an example in which the first virtual resource is 300 yuan, the second virtual resource is 90 yuan, and the third virtual resource is 190 yuan, the application store allocates 90 yuan out of 300 yuan in the account of the application store to the account of the second application, and allocates 190 yuan out of 300 yuan in the account of the application store to the account of the first application.

As described above, in the method for virtual resource allocation provided in the embodiments of the present disclosure, when the user purchases the authorization permission for the second application, the application store can allocate, based on the associated relationship between the second application and the first application, virtual resources in the virtual resource paid by the user for purchasing the authorization permission for the second application to the account of the second application and the account of the first application. This method may effectively solve the fee allocation problem in the scenario where the application is collaboratively developed by multiple developers. Moreover, the allocation method is highly efficient and can make the process of virtual resource allocation simple and fast. In addition, the allocation process is simple and reliable, which reduces profit distribution disputes among developers and effectively enhances the willingness and enthusiasm of the developers to participate in the application development ecosystem.

Optionally, when the user purchases the authorization permission for the second application, the user equipment can send, to the application store, an authorization request for requesting to acquire the authorization permission for the second application. The application store can send, in response to the authorization request, second information to the user equipment based on the value of the second application, where the second information includes the value of the second application. The second information can further include one or more of a name, developer, and copyright owner of the second application. The user can pay the first virtual resource on the user equipment based on the value of the second application. That is, the above step S101 in which the first virtual resource is acquired can include: receiving the authorization request from the user equipment; in response to the authorization request, sending the second information to the user equipment based on the value of the second application; and receiving the first virtual resource paid from the user equipment.

FIG. 2 is a schematic flow chart of another method for virtual resource allocation provided in embodiments of the present disclosure. As shown in FIG. 2, the method for virtual resource allocation may include the following steps.

In S201, the user equipment sends an authorization request to the application store.

The authorization request is used for requesting to acquire the authorization permission for the second application.

Correspondingly, the application store receives the authorization request.

For example, when the second application is running on the user equipment, the second application displays an interface capable of initiating the authorization request, and the user performs an interactive operation on the interface to trigger the user equipment to send the authorization request to the application store, so as to acquire the authorization permission for the second application.

In S202, the application store sends, in response to the authorization request, second information to the user equipment based on the value of the second application.

The second information includes the value of the second application.

Correspondingly, the user equipment receives the second information.

In S203, the user equipment pays the first virtual resource to the account of the application store.

Correspondingly, the application store receives the first virtual resource paid from the user equipment.

In S204, the application store determines, based on the value of the second application and the value of the first application, the second virtual resource in the first virtual resource allocated to the account of the second application and the third virtual resource in the first virtual resource allocated to the account of the first application.

As for S204, reference can be made to the above description of S102, and details will not be repeated.

In S205, the second virtual resource is allocated to the account of the second application, and the third virtual resource is allocated to the account of the first application.

As for S205, reference can be made to the above description of S103, and details will not be repeated.

Optionally, after receiving the first virtual resource paid from the user equipment, the application store can continue to respond to the authorization request and send a first authorization lock and a first key as well as a second authorization lock and a second key to the user equipment. The first authorization lock is used for authorization locking of the first application downloaded from the application store, and the first key is used for unlocking the authorization locking of the first application. The second authorization lock is used for authorization locking of the second application, and the second key is used t for unlocking the authorization locking of the second application.

In some implementations, an authorization lock (e.g., the first authorization lock or the second authorization lock) used for the authorization locking includes an authorization field for identifying that the authorization lock has a function of controlling authorization time of an application; and a key corresponding to the authorization lock includes effective use time of the key.

Considering the first authorization lock as an example, the first authorization lock can include a first authorization field, and the first authorization field is used for identifying that the first authorization lock has a function of controlling authorization time of an application. The first key corresponding to the first authorization lock includes effective use time of the first key. It is assumed that the effective use time of the first key is one month, it means that the first authorization lock and the first key can effectively authorize the first application for one month. After one month, the first key becomes invalid and the first application cannot create a running instance.

In some implementations, the authorization lock used for the authorization locking includes one or more of: an identifier of an application that uses the authorization lock for the authorization locking, an identifier of the authorization lock, and an authorization type. Authorization types includes free and fee-based types. The key corresponding to the authorization lock includes one or more of: an identifier of the key, an identifier of the authorization lock corresponding to the key, and an identifier of an application that uses the authorization lock corresponding to the key for the authorization locking.

Considering the first authorization lock as an example, the first authorization lock can include an identifier of the first application that uses the first authorization lock for authorization locking (e.g., a predefined identifier of the first application), an identifier of the first authorization lock (e.g., an authorization lock identifier (ID)), an authorization type (e.g., free or fee-based type), etc. The first key corresponding to the first authorization lock can include: an identifier of the first key, an identifier of the first authorization lock corresponding to the first key, an identifier of the first application that uses the first authorization lock corresponding to the first key for authorization locking, etc.

Optionally, a single authorization lock can develop a plurality of authorization keys, which will not be limited here.

It will be noted that the value of each application (e.g., the first application, the second application, etc.) described in the embodiments of the present disclosure may be uploaded to the application store by the developer or copyright owner of the application when the application is published on the application store. For the second application, the developer or copyright owner of the second application needs to consider the value of the first application when determining the value of the second application. For example, the value of the second application is at least greater than or equal to the value of the first application.

Optionally, the first application described in the embodiments of the present disclosure can be an application including a plurality of levels. For example, APP1 calls APP2 to implement functions of APP2, and APP2 calls APP3 to implement functions of APP3; and thus, APP1 is considered as the second application, and APP2 and APP3 are considered as two levels of the first application. Alternatively, APP2 may be considered as the second application, and APP3 may be considered as the first application.

The implementations of the associated relationship between the first application and the second application in the above embodiments will be exemplarily described below.

In some implementations, the second application can include first information, and the first information is used for indicating the first application associated with the second application. Establishing, by the application store, the associated relationship between the first application and the second application can include: establishing the associated relationship between the first application and the second application based on the first information included in the second application, or using the first information included in the second application as the associated relationship between the first application and the second application.

Optionally, when developing the second application, the developer of the second application can add an identifier of the first application to the second application, or add some fields capable of indicating the first application. The identifier of the first application or the fields capable of indicating the first application are the above-mentioned first information. That is, the first information can include the identifier of the first application or some fields capable of indicating the first application.

For example, after the second application is published on the application store, the application store side maintains an associated relationship table for the second application and the first application based on the identifier of the first application or the fields capable of indicating the first application included in the second application, so as to establish the associated relationship between the first application and the second application. For example, the associated relationship table includes an identifier of the second application, and the identifier of the first application corresponding to the identifier of the second application or the fields capable of indicating the first application. When the second application is downloaded, the application store can determine which application is the first application by querying the associated relationship between the first application and the second application (e.g., the association relationship table), and send the second application and the first application together.

For another example, after the second application is published on the application store, the application store side can directly use the identifier of the first application or the fields capable of indicating the first application included in the second application as the associated relationship between the first application and the second application. When the second application is downloaded, the application store can determine which application is the first application by querying the identifier of the first application or the fields capable of indicating the first application included in the second application, and send the second application and the first application together.

In the present disclosure, different applications in the application store have different identifiers. That is, a different application in the application store has a unique identifier.

In an implementation, the first application and the second application have the same developer. The developer may develop the first application locally, develop the second application based on the first application, and then publish the first application and the second application on the application store.

In another implementation, the first application and the second application have different developers. The application store may include the first application. The developer may acquire the first application from the application store, develop the second application based on the first application, and then publish the second application on the application store.

The method of the developer acquiring the first application from the application store and developing the second application based on the first application will be exemplarily described below.

For example, a device on the developer side sends a request for downloading the first application to the application store. The device on the developer side may include a server or a computer used by the developer. The application store sends the first application to the device on the developer side in response to the request for downloading the first application. The request for downloading the first application may include the identifier of the first application; and the application store may find the stored first application based on the identifier of the first application and send it to the device on the developer side. In this case, the device on the developer side may acquire the first application from the application store. The developer may develop the second application based on the first application. For example, the developer develops the second application and add an interface capable of calling the first application in the second application, so that the second application can call the first application to implement the functions of the first application. After the second application is developed, the device on the developer side can publish the second application on the application store.

For example, the process of developing the second application based on the first application is as follows.
1). An APP model of the second application is created, and a unique identifier (e.g., a globally unique identifier) is assigned to the APP model of the second application. For example, the developer of the second application creates the APP model of the second application in a development studio.
2). A data model that the APP model of the second application depends on is defined, a data predefinition of the data model that the APP model of the second application depends on (which is referred to as the data predefinition of the second application) is released onto a system library of the second application, and a unique identifier (e.g., a globally unique identifier) is assigned to the data predefinition of the second application. The system library of the second application is a system library used by the developer who develops the second application, and the system library of the second application and the development studio of the developer of the second application can be connected through a network.

Regarding the concepts of model and predefinition mentioned in the present disclosure, the model is information that describes a structure of an object during modeling abstraction, and the predefinition is information about a model with a determined structure and that information is configured with parameters. The predefinition records information of the model and is used for instantiation of the object. The instantiation of the object means building the structure of the object based on the structure of the model and taking parameter values as initial values of the object. The predefinition may also be used by other models as a sub-predefinition by reference.

For example, operations of creating the data model includes: creating a new model, and assigning a name and an identifier; adding members, and designating types of the members; removing members; adding or removing a sub-predefinition; setting an initial value of a sub-predefinition; updating a model version; or releasing a certain model version to create the predefinition. Operations of creating the predefinition includes: designating a certain model version to release (create) the predefinition; assigning a name and an identifier; or setting parameter values (attributes and members) of the predefinition.

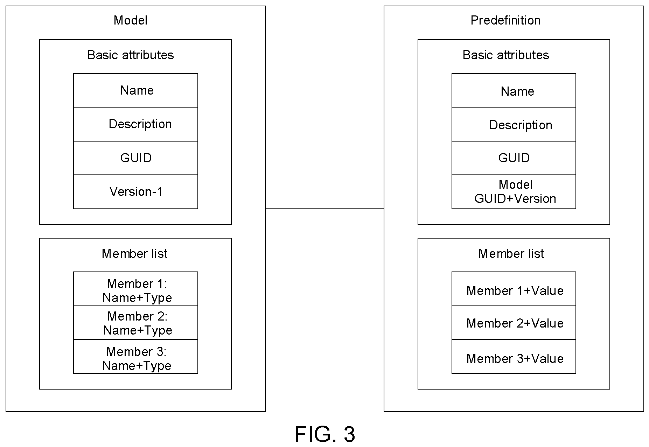

FIG. 3 is a schematic diagram showing a relationship between a model and a predefinition provided in embodiments of the present disclosure.

As shown in FIG. 3, the model can include basic attributes and a member list; the basic attributes can include name, description, globally unique identifier (GUID), and version; and the member list can include "Member 1: Name+Type", "Member 2: Name+Type", and "Member 3: Name+Type".

The predefinition can include basic attributes and a member list; the basic attributes can include name, description, GUID, and model GUID+version; and the member list can include "Member 1+Value", "Member 2+Value", and "Member 3+Value".

The data model described in step 2) is a concept of a spatiotemporal database, which describes a structure of a data object in the spatiotemporal database and is an abstract description of the object in an objective world.

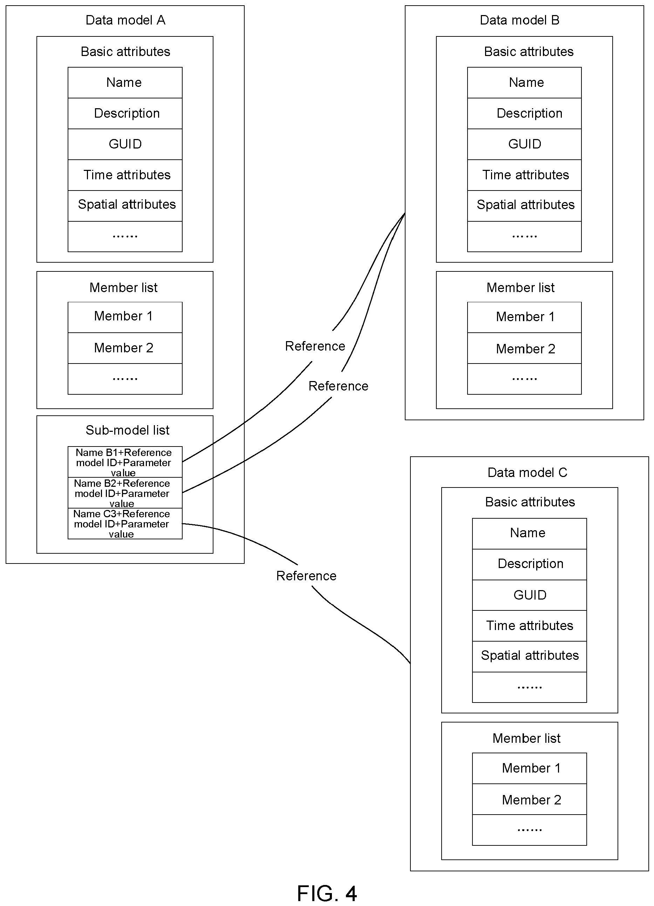

For example, FIG. 4 is a schematic diagram of a data model provided in embodiments of the present disclosure, and as shown in FIG. 4, the data model includes: basic attributes, a member list, and a sub-model list. The data model with sub-models is a composite data model. For example, the data model A in the figure is a composite data model, and the data model B and the data model C are sub-models of the data model A.

In the data model, the basic attributes describe inherent attributes of the data, including name, description, GUID, time attribute (e.g., precision), spatial attribute (e.g., coordinate system or geometric shape). The member list describes free defined fields, and each member describes its field name and data type, e.g., Member 1, Member 2, etc. The sub-model list records identifiers of data predefinitions of data models that are used as sub-models by reference, and establishes a dependency relationship between the sub-models and the data model. For example, the sub-model list of the data model A includes identifiers of data predefinitions of the data model B and the data model C, e.g., "Name B1+Reference model ID+Parameter value", "Name B2+Reference model ID+Parameter value", "Name C3+Reference model ID+Parameter value", etc.

For example, all motor devices have parameters such as speed, temperature, and current. A data model of the motor devices is established. The data model of the motor devices can include members of speed, temperature, and current. The data model of the motor devices may uniformly describe the same type of motors.

For another example, it is assumed that there are fixed disk production lines, static disk production lines, and final assembly production lines inside compressor workshops, a data model of the compressor workshops is established. The data model of the compressor workshops can include sub-models, which include a fixed disk production line, a static disk production line, and a final assembly production line. The data model of the compressor workshops may describe the same type of compressor workshop models.

3). Resource objects that the APP model of the second application depends on (which are referred to as resource objects of the second application) are defined in a resource library, and unique identifiers (e.g., globally unique identifiers) are assigned to the resource objects of the second application.

The resource object is the concept in the spatiotemporal database. Binary file data is organized and managed in an object-oriented manner, and an identifier is assigned to each resource object. The APP model of the second application can access data of the resource object through the identifier of the resource object.

For example, an icon is defined as the resource object to form a dependency relationship with the APP model of the second application, and the APP model of the second application can use this icon. For another example, a video file is defined as the resource object to form a dependency relationship with the APP model of the second application, and the APP model of the second application can read the video file for playing through the dependency relationship.

4). A dependent data predefinition list of the second application is established on the APP model of the second application, the data predefinition of the second application is selected from the system library of the second application, and an identifier of the data predefinition of the second application is recorded in the dependent data predefinition list of the second application. The data predefinition in the system library of the second application may be built by the developer or purchased from the application store.

5). A dependent resource list of the second application is established on the APP model of the second application, the resource objects of the second application are selected from the resource library, and identifiers of the resource objects of the second application are recorded in the dependent resource list of the second application. The resource objects in the resource library may be built by the developer or purchased from the application store.

6). A sub-APP list of the APP model of the second application is added, the predefinition of the first application as the sub-APP is selected from the system library of the second application, and the identifier of the predefinition of the first application is recorded in the sub-APP list of the APP model of the second application. The predefinition of the first application is the first application acquired from the application store in S201 to S202. The identifier of the predefinition of the first application is the identifier of the first application described in the above embodiments. The predefinition of the first application may be uploaded to the application store by the copyright owner or developer of the first application.

7). A program logic of functional functions of the APP model of the second application is compiled.

8). The predefinition of the APP model of the second application (which is referred to as the predefinition of the second application) is released onto the system library of the second application, and a unique identifier (e.g., a globally unique identifier) is assigned to the predefinition of the second application. The identifier of the predefinition of the second application is the identifier of the second application.

When releasing the predefinition of the second application, parameter values (such as attributes and members) of the predefinition may also be set.

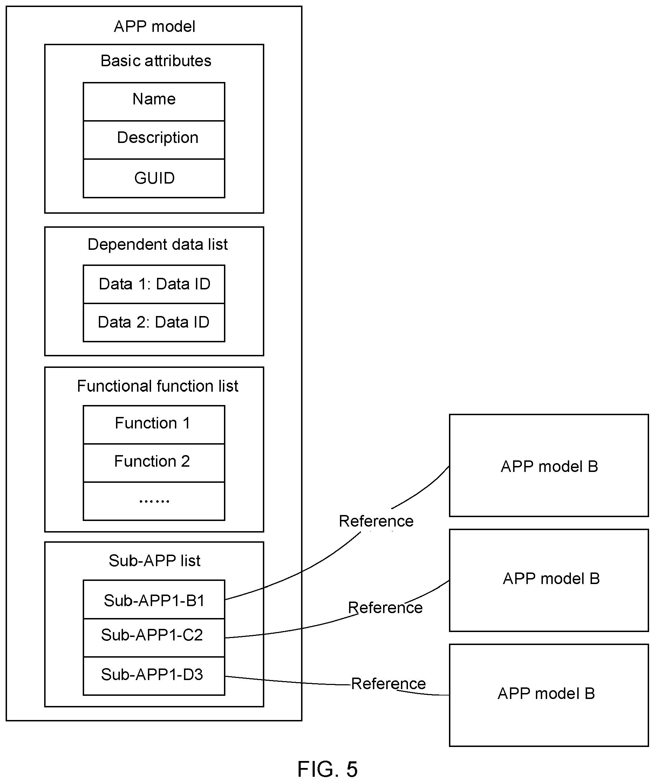

For example, FIG. 5 is a schematic diagram showing a composition of an APP model of a second application provided in embodiments of the present disclosure.

As shown in FIG. 5, the APP model of the second application can include: basic attributes, a dependent data list, a functional function list, and a sub-APP list.

The basic attributes can include: name, description, and GUID (i.e., the unique identifier of the APP model of the second application).

The dependent data list records data model(s) or resource object(s) that the APP model of the second application needs to use, so as to establish a relationship between the APP model of the second application and the data model or resource objects that the APP model of the second application depends on, for example, records "Data 1: data ID", "Data 2: data ID", etc., which represent identifiers of the data predefinitions of the data models that the APP model of the second application depends on or identifiers of the resource objects that the APP model of the second application depends on. The dependent data list may include the above-mentioned dependent data predefinition list and/or the above-mentioned dependent resource list.

The functional function list can include: Function 1, Function 2, and other functional functions of the APP model of the second application, and these functional functions are implementations of the program logic of the APP model of the second application.

The sub-APP list records information of the first application to establish an associated relationship between the APP model of the second application and the first application. For example, the sub-APP list includes identifiers and configuration parameters of first applications such as Sub-APP-B1, Sub-APP-C2, and Sub-APP-D3. That is, APP model B, APP model C, and APP model D can be the first applications as mentioned above.

Through the process described in the above steps 1) to 8), S203 of developing the second application based on the first application may be realized.

It will be understood that the process of developing the first application is similar to the process of developing the second application, the only difference is as follows. In a case where the first application does not include a sub-APP of a deeper level (i.e., the first application does not call other applications to implement functions of other applications), the process of developing the first application does not include a process similar to the process described in the above step 6). In a case where the first application further includes a sub-APP of a deeper level (i.e., the first application calls other applications to implement functions of other applications), the process of developing the first application is consistent with the process described in the above steps 1) to 8). The process of developing the first application will not be described in detail here.

It will be noted that there may be a situation where the second application and the first application depend on the same data predefinition or resource object since the dependency relationship is established when the second application and the first application are developed separately. In other words, the dependent data lists of the second application and the first application may record the identifier of the same data predefinition or the identifier of the same resource object.

For example, the second application is published on the application store by the copyright owner of the second application, and the process of the copyright owner of the second application publishing the second application on the application store is as follows.
1). The copyright owner of the second application creates an APP merchandise of the second application in the application store, and the APP merchandise of the second application includes the identifier of the predefinition of the second application.
   The APP merchandise refers to corresponding information created for the predefinition of the APP in the application store, which mainly describes commercialization information of the predefinition of the APP. For example, the APP merchandise of the second application further includes a logo, video, merchandise price, merchandise name, merchandise description of the second application.
2). The application store determines, based on a registered account of the copyright owner of the second application in the application store (or a system product code of the copyright owner of the second application), the system library of the second application to which the predefinition of the second application corresponding to the APP merchandise of the second application belongs. That is, the application store can determine, based on the registered account of the copyright owner of the second application in the application store, which system library the predefinition of the second application corresponding to the APP merchandise of the second application comes from.
3). The application store requests the system library of the second application to publish the predefinition of the second application based on the identifier of the predefinition of the second application included in the APP merchandise of the second application.
4). The system library of the second application performs the following steps (4.1) to (4.2) in response to the request for publishing the predefinition of the second application from the application store.

In (4.1), the system library of the second application uploads the predefinition of the second application to the application store. The predefinition of the second application can include the APP model and configuration parameters of the second application.

In (4.2), the system library of the second application uploads the data predefinition and resource object of the second application to the application store based on the dependent data predefinition list and dependent resource list of the second application.

Through the process described in the above steps 1) to 4), it may be possible to publish the second application on the application store.

It will be noted that in the above step 4), in a case where the second application is further associated with other local sub-APPs (not sub-APPs acquired from the application store), the system library of the second application may further upload predefinitions of the local sub-APPs associated with the second application to the application store, and upload data predefinitions and resource objects of the local sub-APPs to the application store based on dependent data predefinition lists and dependent resource lists of the local sub-APPs. For the first application, since data related to the first application already exists in the application store, the system library of the second application does not need to upload the data related to the first application (e.g., the predefinition of the first application, the data predefinition and resource object of the first application, etc.) to the application store. Therefore, the application store includes only one set of data related to the first application, achieving the effect of saving storage resources of the application store as described in the above embodiments.

Optionally, in the present disclosure, the second application can be referred to as a finished product APP, and the sub-APP of the second application (e.g., the first application) can be referred to as a part APP. The finished product APP can be a program capable of being run independently. The part APP can be an APP program capable of being run independently or a program capable of not being run independently. The part APP can be used as a sub-APP of one or more finished product APPs, and be called by the finished product APP(s) to realize functions of the part APP.

It will be understood that the part APP and the finished product APP are relative concepts, and an application that is used as a sub-APP can be referred to as a part APP. For example, in a case where there is a fourth application that can call the second application to implement the functions of the second application, the fourth application is a finished product APP and the second application is a part APP.

The method for virtual resource allocation provided in the embodiments of the present disclosure will be further described below using a specific example.

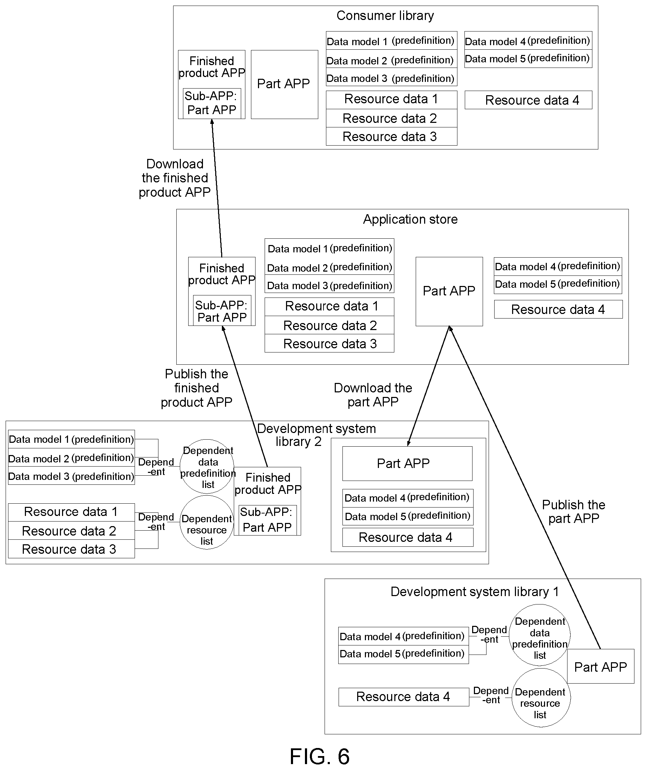

FIG. 6 is a schematic diagram showing a composition of an application management system provided in embodiments of the present disclosure. As shown in FIG. 6, the development system library 1, the development system library 2, the application store, and the consumer library can constitute the application management system.

The development system library 1 can be a system library for developing the part APP (e.g., the first application). The developer of the part APP can develop the part APP in the development system library 1 and publish the part APP on the application store. The part APP can include a dependent data predefinition list and a dependent resource list. The dependent data predefinition list establishes a dependency relationship between the part APP and the data model 4 (predefinition), and a dependency relationship between the part APP and the data model 5 (predefinition). The dependent resource list establishes a dependency relationship between the part APP and the resource data 4.

The development system library 2 can be a system library for developing the finished product APP (e.g., the second application). The developer of the finished product APP can download the part APP from the application store to the development system library 2, develop the finished product APP in the development system library 2 based on the part APP, and publish the finished product APP on the application store. The finished productAPP can include a dependent data predefinition list and a dependent resource list. The dependent data predefinition list establishes a dependency relationship between the finished product APP and the data model 1 (predefinition), a dependency relationship between the finished product APP and the data model 2 (predefinition), and a dependency relationship between the finished product APP and the data model 3 (predefinition). The dependent resource list establishes a dependency relationship between the finished product APP and the resource data 1, a dependency relationship between the finished product APP and the resource data 2, and a dependency relationship between the finished product APP and the resource data 3. An associated relationship between the finished product APP and the part APP is established, so that the finished product APP can call the part APP to implement the functions of the part APP.

The consumer library can be a library on a consumer (user) side that consumes and uses the second application. The consumer may use the user equipment to download the finished product APP from the application store to the consumer library. When the consumer uses the user equipment to download the finished product APP from the application store, the application store may send both the finished product APP and the part APP to the consumer library.

For example, the process of the consumer downloading the finished product APP from the application store includes the following. 1). The consumer performs an instruction for downloading the finished product APP on an interactive interface provided by the application store through the user equipment, so as to trigger the user equipment to send a request for downloading the finished productAPP to the application store, where the request for downloading the finished product APP may designate a name of the finished product APP (e.g., including an identifier of the finished product APP). 2). The application store sends the predefinition of the finished product APP to the consumer library based on the name of the finished product APP designated by the request for downloading the finished product APP. 3). The application store finds the data predefinition and resource data that the finished product APP depends on based on the dependent data predefinition list and dependent resource list of the predefinition of the finished product APP, and sends the data predefinition and resource data to the consumer library. 4). The application store sends the predefinition of the part APP to the consumer library based on the identifier of the part APP included in the finished product APP (e.g., through querying the sub-APP list of the finished product APP). 5). The application store finds the data predefinition and resource data that the part APP depends on based on the dependent data predefinition list and dependent resource list of the predefinition of the part APP, and sends the data predefinition and resource data to the consumer library.

Optionally, the development system libraries (the development system library 1 and development system library 2) may be portions of an APP development system, and the APP development system may further include a developer studio. The developer studio refers to a system where the developer compiles the APP model, and can perform APP model management operations such as creating, compiling, and releasing. The development system library is a system that stores the APP model developed by the developer and releases the APP model as the APP predefinition.

Optionally, the consumer library may be a portion of a consumer application system, and the consumer application system may further include an APP running environment and an APP operation and maintenance system. The consumer application system refers to an independent business application system for a production enterprise. The production enterprise accomplishes business activities on the system and is responsible for maintaining the business application system. The consumer library is a system for storing the APP predefinition purchased by the consumer. The APP operation and maintenance system is a system for the consumer to operate and maintain the APP. The APP running environment is an environment system that runs the APP.

After the finished product APP and part APP are downloaded to the consumer library, the finished product APP predefinition may create an APP running instance, designate the running environment (a computer node), and allocate computer resource (e.g., a central processing unit (CPU), memory, network bandwidth, etc.). The APP running instance carries the identifier of the predefinition of the APP. The APP operation and maintenance system may arrange the functional logic of the APP model of the predefinition of the APP (the predefinition of the APP carries the identifier of the APP model) to the designated computer node based on the identifier of the predefinition of the APP on the APP running instance. The APP operation and maintenance system, consumer library, and APP running environment accomplish the arrangement process of APP program files through the network communication. After the arrangement is completed, the running of the APP instance may be started and the execution of the functional function logic of the APP instance is started.

Optionally, the application store may include a store system consisting of a store system and a transaction system. The store system may be used as a merchandise transaction circulation system operated by an operator of the application store. An APP software development enterprise (i.e., a developer) and a production enterprise (i.e., a consumer) may achieve APP transaction and sharing through the store system. The store system may include one or more stores for storing published APP merchandises, and is responsible for publishing, downloading, authorization key distribution, etc. of APPs. The transaction system may realize functions such as order management and payment management.

In the present disclosure, the developer of the finished product APP and the developer of the part APP may achieve collaborative development, which can effectively improve the development efficiency of the finished product APP. The part APP can be called by one or more finished product APP to implement the functions of the part APP, which may achieve the reuse of the part APP by different development organizations. Through the application store, the part APP can be adopted by more development organizations, the worth of the part APP is enlarged, and the worth of the developer of the part APP is also enlarged, so that the enthusiasm of the APP developers may be enhanced.

Considering the scenario of an industrial APP as an example, through this collaborative manner, many industrial APP developers can divide the work and collaborate, so that a complex industrial APP is transformed from being developed by a single developer to being developed collaboratively by many developers, and the output efficiency of the industrial APP will be improved.

In addition, the finished product APP and the part APP are stored separately in the application store, which may ensure that there is no redundant data and then save the storage resource of the application store occupied by the APPs.

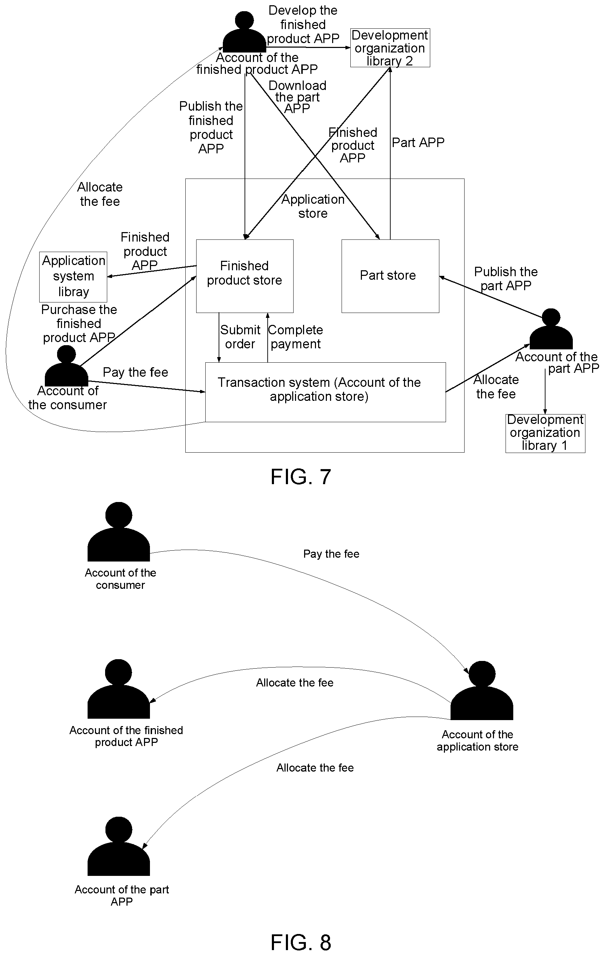

Considering an example in which the virtual resource is fee (such as money), FIG. 7 is a schematic diagram showing a process of a consumer purchasing an APP provided in embodiments of the present disclosure. As shown in FIG. 7, the process of the consumer purchasing the APP can be as follows.
1). The account of the consumer selects a finished product APP to be purchased from a finished product APP store (referred to as a finished product store) and adds the finished product APP to a shopping cart, then settles the APP merchandise (which may be plural in number) in the shopping cart, and submits the purchase order to the transaction system.
   For example, the consumer enters a copy quantity and copy validity time (including start time and end time) of each finished product APP merchandise; the finished product store displays, based on the information entered by the consumer, the order content including order number, merchandise name, quantity, amount of money, purchasing account, selling account, and payment status. The application store calculates the transaction amount of money based on the copy quantity and unit price of the finished product APP. The buyer of the finished product PP order is the account of the consumer, and the seller is the account of the finished product APP. After the consumer confirms the order content, the consumer submits the order of the finished product APP to the transaction system.
2). The transaction system receives the submitted order, splits the order based on the structure of the finished product APP (the sub-APP list), and creates purchase orders for all part APPs included in the finished product APP. If the part APP is the merchandise (corresponding APP merchandise which may be searched in the application store based on the APP predefinition ID recorded in the sub-APP list), the transaction system creates the purchase order for the part APP (the calculation of the amount of money is the same as the above description). In addition to the above order content, the order of the part APP further records an upper-level order number. The buyer is the account of the finished product APP, and the seller becomes the account of the part APP. If a next level of part APP exists in the part APP, purchase orders will be created level by level based on the above process.
3). During the level-by-level split process, if the predefinition of the part APP does not exist in the application store, the purchase order of the finished product APP cannot be paid. If the part APP exists in the store, the consumer can make the payment.
4) The transaction system receives the payment for the order of the finished product APP and then starts to perform payment based on the above-mentioned split order. Specifically, the consumer pays the fee of the order of the finished product APP based on the amount of money of the order, and after the transaction system of the application store receives the fee, the transaction system allocates the fee to the account of the finished product APP and the account of the part APP level by level.

For example, FIG. 8 is a schematic diagram showing a level-by-level allocation provided in embodiments of the present disclosure. As shown in FIG. 8, for the fee (e.g., the first virtual resource) that the account of the consumer pays to the account of the application store for purchasing the finished product APP, the application store may allocate it to the account of the finished product APP and the account of the part APP level by level based on the hierarchy of the finished product APP and the part APP. As for the details of the allocation method, reference may be made to the description of the above embodiments, which will not be repeated here.

It will be understood that, in actual implementations, the application store described in the embodiments of the present disclosure may include one or more hardware structures and/or software modules for implementing the corresponding methods described above, and these execution hardware structures and/or software modules may constitute an electronic device. Those skilled in the art should easily know that the present disclosure may be implemented in hardware or in a combination of hardware and computer software with reference to method steps of the examples described in the embodiments disclosed herein. Whether a certain function is executed by hardware or computer software driving hardware depends on specific application and design constraints of the technical solutions. Professionals can implement the described functions by using different methods on each specific application, but such implementations should not be considered beyond the scope of the present disclosure.

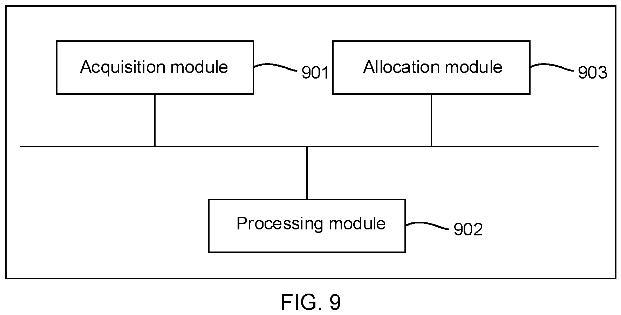

Based on this understanding, considering hardware structures and/or software modules contained in the application store as an example, the embodiments of the present disclosure further provide a device for virtual resource allocation, which may be applied to the above-mentioned application store (e.g., the hardware device corresponding to the application store). FIG. 9 is a schematic structural diagram of a device for virtual resource allocation provided in embodiments of the present disclosure. As shown in FIG. 9, the device for virtual resource allocation can include: an acquisition module 901, a processing module 902, and an allocation module 903. The acquisition module 901 is used for acquiring a first virtual resource; the first virtual resource is paid to an account of an application store when a user equipment acquires an authorization permission for a second application in the application store; the second application and a first application in the application store have an associated relationship; and the second application is capable of calling the first application to implement functions of the first application. The processing module 902 is used for determining, based on a value of the second application and a value of the first application, a second virtual resource allocated to an account of the second application and a third virtual resource allocated to an account of the first application from the first virtual resource. The allocation module 903 is used for allocating the second virtual resource to the account of the second application and allocating the third virtual resource to the account of the first application.

In some implementations, the processing module 902 is specifically used for: determining a fourth virtual resource from the first virtual resource based on the value of the second application and the value of the first application; determining the second virtual resource from the fourth virtual resource based on a first allocation rule; determining a fifth virtual resource from the first virtual resource based on the value of the first application; and determining the third virtual resource from the fifth virtual resource based on a second allocation rule.

Optionally, the fourth virtual resource is equal to a difference between the value of the second application and the value of the first application. The fifth virtual resource is equal to the value of the first application.

In some implementations, the first allocation rule includes: a ratio of the second virtual resource to the fourth virtual resource, or the second virtual resource being a remaining resource after removing a first fixed virtual resource from the fourth virtual resource.

In some implementations, the second allocation rule includes: a ratio of the third virtual resource to the fifth virtual resource, or the third virtual resource being a remaining resource after removing a second fixed virtual resource from the fifth virtual resource.

Optionally, the first fixed virtual resource and the second fixed virtual resource are the same or different.

Optionally, the acquisition module 901 is specifically used for: receiving an authorization request from the user equipment, the authorization request being used for requesting to acquire the authorization permission for the second application; in response to the authorization request, sending second information to the user equipment based on the value of the second application, the second information including the value of the second application; and receiving the first virtual resource paid from the user equipment.

For example, the acquisition module 901 includes a receiving module and a sending module; the receiving module is used for receiving the authorization request from the user equipment; and the sending module is used for, in response to the authorization request, sending second information to the user equipment based on the value of the second application. The receiving module can further be used for receiving the first virtual resource paid from the user equipment.

Optionally, the receiving module is further used for receiving a first download request from the user equipment, the first download request being used for requesting download of the second application. The sending module is further used for sending the second application and the first application to the user equipment in response to the first download request.

Optionally, the receiving module is further used for receiving a second download request, the second download request being used for requesting download of the first application in the application store. The sending module is further used for sending the first application in response to the second download request, where the first application is used for developing the second application.

In some implementations, copyright owners of the first application and the second application are the same.

In some other implementations, the copyright owners of the first application and the second application are different.

In some implementations, developers of the first application and the second application are the same.

In some other implementations, the developers of the first application and the second application are different.

Optionally, the second application includes first information, and the first information is used for indicating the first application associated with the second application.

In some implementations, the first information includes an identifier of the first application; and different applications in the application store have different identifiers.

As mentioned above, the embodiments of the present disclosure may divide the executive subject involved in the method into functional modules according to the foregoing method examples. The integrated module may be implemented in a form of hardware or in a form of software functional module. In addition, it will be noted that, the division of modules in the embodiments of the present disclosure is schematic, which is merely a logical function division, and there may be other division manners in actual implementations. For example, the division for each functional module is based on a corresponding function, or two or more functions are integrated into one processing module.

Regarding the device in the above embodiments, specific manners for modules performing operations and beneficial effects have been described in detail in the above method embodiments, which will not be repeated here.

The embodiments of the present disclosure further provide an electronic device. The electronic device may be a hardware device corresponding to an application store. The electronic device includes a processor and a memory for storing instructions executable by the processor. The processor is configured to, when executing the instructions, cause the electronic device to implement the method as described in the above embodiments.

In exemplary embodiments, the embodiments of the present disclosure further provide a computer-readable storage medium has stored thereon computer program instructions that, when run on an electronic device, cause the electronic device to implement the method as described in the above embodiments. The computer-readable storage medium may be a non-transitory computer-readable storage medium. For example, the non-transitory computer-readable storage medium may be a read only memory (ROM), a random access memory (RAM), a compact disc ROM (CD-ROM), a magnetic tape, a floppy disk, an optical data storage device, and the like.

In exemplary embodiments, the embodiments of the present disclosure further provide a computer program product, including a computer-readable code, or a non-volatile computer-readable storage medium carrying a computer-readable code. When the computer-readable code is executed in an electronic device, a processor in the electronic device implements the method as described in the above embodiments.

Other embodiments of the present disclosure will be apparent to those skilled in the art from consideration of the specification and practice of the present disclosure claimed herein. The present disclosure is intended to cover any modifications, uses or adaptive changes of the present disclosure, which follow the general principles of the present disclosure and include common knowledge or customary technical means in the technical field that are not applied for in the present disclosure. It is intended that the specification and examples be considered as exemplary only, with the true scope and spirit of the present disclosure being indicated by the appended claims.

It should be understood that the present disclosure is not limited to the exact construction that has been described above and shown in the drawings, and is subject to various modifications and changes without departing from the scope thereof. The scope of the present disclosure is limited by the appended claims.

## Claims

1. A method for virtual resource allocation, **characterized in that** the method comprises:
acquiring a first virtual resource, wherein the first virtual resource is paid to an account of an application store when a user equipment acquires an authorization permission for a second application in the application store; the second application and a first application in the application store have an associated relationship; and the second application is capable of calling the first application to implement functions of the first application;
determining, based on a value of the second application and a value of the first application, a second virtual resource allocated to an account of the second application and a third virtual resource allocated to an account of the first application from the first virtual resource; and
allocating the second virtual resource to the account of the second application and allocating the third virtual resource to the account of the first application.

2. The method according to claim 1, **characterized in that** determining, based on the value of the second application and the value of the first application, the second virtual resource allocated to the account of the second application and the third virtual resource allocated to the account of the first application from the first virtual resource, comprises:
determining a fourth virtual resource from the first virtual resource based on the value of the second application and the value of the first application;
determining the second virtual resource from the fourth virtual resource based on a first allocation rule;
determining a fifth virtual resource from the first virtual resource based on the value of the first application; and
determining the third virtual resource from the fifth virtual resource based on a second allocation rule.

3. The method according to claim 2, **characterized in that** the fourth virtual resource is equal to a difference between the value of the second application and the value of the first application; and
the fifth virtual resource is equal to the value of the first application.

4. The method according to claim 2, **characterized in that** the first allocation rule comprises: a ratio of the second virtual resource to the fourth virtual resource, or the second virtual resource being a remaining resource after removing a first fixed virtual resource from the fourth virtual resource.

5. The method according to claim 2, **characterized in that** the second allocation rule comprises: a ratio of the third virtual resource to the fifth virtual resource, or the third virtual resource being a remaining resource after removing a second fixed virtual resource from the fifth virtual resource.

6. The method according to any one of claims 1 to 5, **characterized in that** acquiring the first virtual resource comprises:
receiving an authorization request from the user equipment, the authorization request being used for requesting to acquire the authorization permission for the second application;
sending, in response to the authorization request, second information to the user equipment based on the value of the second application, the second information comprising the value of the second application; and
receiving the first virtual resource paid from the user equipment.

7. The method according to any one of claims 1 to 5, **characterized in that** the method further comprises:
receiving a first download request from the user equipment, the first download request being used for requesting download of the second application; and
sending the second application and the first application to the user equipment in response to the first download request.

8. The method according to any one of claims 1 to 5, **characterized in that** the method further comprises:
receiving a second download request, the second download request being used for requesting download of the first application in the application store; and
sending the first application in response to the second download request, wherein the first application is used for developing the second application.

9. The method according to any one of claims 1 to 5, **characterized in that** copyright owners of the first application and the second application are the same or different.

10. The method according to any one of claims 1 to 5, **characterized in that** developers of the first application and the second application are the same or different.

11. The method according to any one of claims 1 to 5, **characterized in that** the second application comprises first information, and the first information is used for indicating the first application associated with the second application.

12. The method according to claim 11, **characterized in that** the first information comprises an identifier of the first application; and
different applications in the application store have different identifiers.

13. A device for virtual resource allocation, **characterized in that** the device comprises:
an acquisition module used for acquiring a first virtual resource, wherein the first virtual resource is paid to an account of an application store when a user equipment acquires an authorization permission for a second application in the application store; the second application and a first application in the application store have an associated relationship; the second application is capable of calling the first application to implement functions of the first application;
a processing module used for determining, based on a value of the second application and a value of the first application, a second virtual resource allocated to an account of the second application and a third virtual resource allocated to an account of the first application from the first virtual resource; and
an allocation module used for allocating the second virtual resource to the account of the second application and allocating the third virtual resource to the account of the first application.

14. An electronic device, **characterized by** comprising: a processor, a memory, and a computer program; wherein the computer program is stored in the memory, and the computer program, when executed by the processor, causes the electronic device to implement the method according to any one of claims 1 to 12.

15. A computer-readable storage medium comprising a computer program, **characterized in that** the computer program, when run on an electronic device, causes the electronic device to implement the method according to any one of claims 1 to 12.

16. A computer program product, comprising a computer-readable code, or a non-volatile computer-readable storage medium carrying a computer-readable code, **characterized in that** when the computer-readable code is executed in an electronic device, a processor in the electronic device implements the method according to any one of claims 1 to 12.
